# EUROPÄISCHE PATENTSCHRIFT

(11) **EP 3 715 182 B1**
(45) Veröffentlichungstag und Bekanntmachung des Hinweises auf die Patenterteilung: **08.09.2021**
(21) Anmeldenummer: 19165982.0
(22) Anmeldetag: 28.03.2019
(51) Int. Cl.: B60R 16/023

(54) **ADAPTER**
ADAPTER
ADAPTATEUR

(43) Veröffentlichungstag der Anmeldung: 30.09.2020
(73) Patentinhaber: Hella Gutmann Solutions GmbH, 79241 Ihringen (DE)
(72) Erfinder: HOES, Thorsten, 79183 Waldkirch (DE)
(74) Vertreter: Pfenning, Meinig & Partner mbB

(56) Entgegenhaltungen:
- EP-A1- 3 441 266
- US-A- 4 692 770
- US-A1- 2010 105 241
- US-A1- 2013 246 135
- US-A1- 2015 228 127
- US-A1- 2016 013 598
- US-A1- 2017 076 515

## Beschreibung

Die vorliegende Erfindung betrifft einen Adapter, der einerseits drahtgebunden mit einer Fahrzeugdiagnoseschnittstelle eines Fahrzeuges und andererseits drahtlos mit einem externen Fahrzeugdiagnosegerät und/oder einem mobilen Endgerät kommunizieren kann. Weiter betrifft die Erfindung zwei Systeme und ein Verfahren, in denen der Adapter vorgesehen ist.

Moderne Fahrzeuge sind komplexe elektrische und mechanische Systeme, die viele miteinander kommunizierende Komponenten verwenden, um einen sicheren und effizienten Fahrzeugbetrieb zu unterstützen. Derartige Komponenten können anfällig für Störungen, Ausfälle und Fehler sein, welche den Betrieb eines Fahrzeugs beeinträchtigen können. Wenn derartige Störungen oder Fehler auftreten, kann die beeinträchtigte Komponente einen entsprechenden Fehlercode auslösen, zum Beispiel einen Diagnostic Trouble Code (DTC). Der Fehlercode wird in der Regel in einem fahrzeugseitigen Speicher gespeichert. Hiernach kann z.B. ein Warnsignal ausgegeben werden, durch welches der Fahrer veranlasst wird, eine Werkstatt aufzusuchen.

Mittels einer Auswertung der Fehlercodes (Fahrzeugdiagnose) kann eine Aussage darüber getroffen werden, welche Fahrzeugkomponenten defekt sind und eine Reparatur benötigen. Hierzu ist eine Fahrzeugdiagnoseschnittstelle vorgesehen, welche oftmals im Fußraum beim Fahrer angeordnet ist. Üblicherweise wird ein externes Fahrzeugdiagnosegerät an die Fahrzeugdiagnoseschnittstelle angeschlossen, um die gespeicherten Fehlercodes auszulesen. Hiernach werden die Fehlercodes durch das Fahrzeugdiagnosegerät analysiert, um zu diagnostizieren, welche Komponenten repariert oder ersetzt werden müssen, um das Problem zu beheben. Im Werkstattalltag haben sich solche Fahrzeugdiagnosegeräte bewährt.

Die US 2017/0076515 A1 offenbart einen Adapter, welcher mit einer Diagnoseschnittstelle verbunden wird. Weiter betrifft die EP 3 441 266 A1 ein Türgriffmodul für ein Fahrzeug.

Bislang werden die Diagnosegeräte beispielsweise mit einem Verlängerungskabel an die Diagnoseschnittstelle angeschlossen. Ein derartiges Verlängerungskabel kann jedoch unhandlich im Werkstattalltag sein. Weiter ist es manchmal erwünscht, die Diagnose durch das Fahrzeugdiagnosegerät außerhalb des Fahrzeuges durchzuführen. Eine drahtlose Kommunikation des Diagnosegeräts mit dem Fahrzeug leidet unter zunehmend erschwerten Funkbedingungen durch die Abschirmung der Funkwellen durch die metallische Karosserie oder metallbedampfte Scheiben.

Es wäre somit wünschenswert, eine praxistaugliche Lösung für die beschriebenen Probleme zu finden.

Diese Aufgabe wird erfindungsgemäß durch einen Adapter, ein Verfahren und ein System gemäß den unabhängigen Ansprüchen gelöst. Vorteilhafte Weiterbildungen sind in der nachfolgenden Beschreibung und in den abhängigen Ansprüchen beschrieben.

Dementsprechend wird ein Adapter bereitgestellt, umfassend:
- ein Gehäuse,
- einen Stecker zum Verbinden mit einer Fahrzeugdiagnoseschnittstelle eines Fahrzeuges,
- ein mit dem Stecker verbundenes Verlängerungskabel,
- eine mit dem Verlängerungskabel verbundene erste Kommunikationseinheit, welche zum drahtlosen Kommunizieren mit einem Fahrzeugdiagnosegerät und/oder einem mobilen Endgerät und/oder zum Kommunizieren mit mindestens einem mit der Fahrzeugdiagnoseschnittstellte verbundenen Fahrzeugsteuergerät ausgebildet ist, und
- ein lösbares Befestigungsmittel zum Anbringen des Gehäuses an einer Fahrzeugaußenseite, einer Fensterscheibe, insbesondere einer teilweise heruntergelassenen Fensterscheibe, einer Fahrzeugtür, einer Fahrzeugsäule und/oder einem Fahrzeugdach.

Die Erfindung sieht also einen zusätzlichen Adapter vor, welcher einerseits drahtgebunden mit einem fahrzeugseitigen Fahrzeugsteuergerät kommunizieren kann und andererseits drahtlos mit einem externen Fahrzeugdiagnosegerät oder einem externen mobilen Endgerät kommunizieren kann. Hierbei sei angemerkt, dass der Adapter, das Fahrzeugdiagnosegerät, das mobile Endgerät und das Fahrzeugsteuergerät voneinander getrennte, jedoch verbindbare, Objekte sind.

Durch den Stecker, das Verlängerungskabel und das Befestigungsmittel kann der Adapter mit der Fahrzeugdiagnoseschnittstelle verbunden werden und derart an dem Fahrzeug angebracht werden, dass eine drahtlose Verbindung zwischen dem Adapter und dem Fahrzeugdiagnosegerät oder dem mobilen Endgerät trotz vieler metallischer Fahrzeugteile aufgebaut und/oder aufrechterhalten bleiben kann.

Das Gehäuse ist so ausgestaltet, dass es nach dem Anbringen am Fahrzeug zumindest teilweise aus einem Innenraum des Fahrzeugs herausragt. Beispielsweise ist die erste Kommunikationseinheit in der genannten Stellung des Adapters zumindest teilweise außerhalb des Fahrzeuges angeordnet. Hierdurch wird eine drahtlose Kommunikation der ersten Kommunikationseinheit nicht durch verchromte Scheiben oder Metallteile des Fahrzeuges gestört.

Das Befestigungsmittel kann integraler Bestandteil des Gehäuses sein oder mit dem Gehäuse verbunden sein. Das Material des Befestigungsmittels kann aus dem gleichen Material des Gehäuses gefertigt sein. Alternativ kann das Material des Befestigungsmittels sich vom Material unterscheiden. Das Befestigungsmittel kann beispielsweise einen Vorsprung, einen Bügel, einen Haken, eine Klemme, einen Saugnapf und/oder einen Magneten umfassen. Ebenfalls wäre Klettverschluss denkbar. Mit dem Befestigungsmittel kann das Gehäuse formschlüssig und/oder kraftschlüssig an dem Fahrzeug befestigt werden.

Der Adapter kann weiter eine Aufwickeleinheit zum Aufwickeln des Verlängerungskabels aufweisen. In einer Ausführungsform weist die Aufwickeleinheit eine Wickelnut oder eine Wickeltrommel zur vollständigen Aufnahme des Verlängerungskabels auf. Hierdurch soll ein Überstehen des Verlängerungskabels in einer Ruhestellung (Parkposition) des Adapters vermieden werden. Wenn das Verlängerungskabel vollständig durch die Aufwickeleinheit aufgenommen ist, kann dies als Ruhestellung des Adapters bezeichnet werden.

In der Regel weist das Verlängerungskabel mindestens zwei Signaladern auf. Das Verlängerungskabel hat einen Durchmesser, der typischerweise von der Anzahl der verwendeten Adern, dem jeweiligem Querschnitt der Adern, einer möglichen Verdrillung und einer zusätzlichen Abschirmung abhängt. Der Durchmesser des Verlängerungskabels kann z.B. mindestens 6 mm und/oder höchstens 15 mm betragen. Damit das Verlängerungskabel beim Aufwickeln nicht beschädigt oder abgeknickt wird, ist es vorteilhaft, wenn die Aufwickeleinheit einen Krümmungsradius von mindestens sechsmal einem äußeren Durchmesser des Verlängerungskabels aufweist. Der Krümmungsradius der Aufwickeleinheit kann z.B. kleiner als zwölfmal der äußere Durchmesser des Verlängerungskabels oder kleiner als zehnmal der äußere Durchmesser des Verlängerungskabels sein. Durch Beschränkung des Krümmungsradius kann der Adapter kompakt gehalten werden. Dementsprechend kann das auf der Aufwickeleinheit aufgewickelte Verlängerungskabel näherungsweise einen Biegeradius von mindestens sechsmal dem äußeren Durchmesser haben. Der Biegeradius kann lokal genau so groß oder mindestens so groß wie der genannte Krümmungsradius sein. Wenn das Kabel mehrfach um die Aufwickeleinheit gewickelt wird, kann sich der Biegeradius des Verlängerungskabels bei jeder zusätzlichen Umwickelung vergrößern.

Es kann eine Aufnahme im Gehäuse zum Aufnehmen des Steckers in der Ruhestellung des Adapters vorgesehen sein. Nach dem Aufwickeln des Verlängerungskabels kann der Stecker in die vorgesehene Aufnahme gesteckt werden. Die Aufnahme kann eine Form haben, welche komplementär zum Stecker ist. Die Fahrzeugdiagnoseschnittstelle ist typischerweise als Steckdose ausgestaltet. Die genannte Aufnahme kann eine Form haben, die der als Steckdose ausgestalteten Fahrzeugdiagnoseschnittstelle entspricht. Es kann vorgesehen sein, dass das Gehäuse Arretierungsmittel zum arretieren des Steckers in der Aufnahme aufweist. Hierdurch kann ein ungewünschtes Abrutschen des Steckers aus der Aufnahme verhindert werden und die Betriebssicherheit des Adapters erhöht werden.

Der Stecker kann insbesondere mechanisch und elektrisch mit der Fahrzeugdiagnoseschnittstelle des Fahrzeuges verbunden werden.

Das Verlängerungskabel sollte nicht zu lang sein, um überstehende Konturen des Verlängerungskabels zu vermeiden. Weiter können Probleme bei den Signallaufzeiten und der elektromagnetischen Verträglichkeit durch ein kurzes Verlängerungskabel reduziert werden. Andererseits sollte das Verlängerungskabel lang genug sein, damit der Adapter wie oben beschrieben am Fahrzeug befestigt werden kann. Typischerweise hat das Verlängerungskabel eine Länge von mindestens 0,5 Meter und/oder höchstens 2 Metern.

Der Adapter kann eine eigene Energieversorgung aufweisen. Die Energieversorgung kann eine Batterie oder einen aufladbaren Akku sein oder umfassen. Es kann auch vorgesehen sein, dass die Energieversorgung eine Antenne oder eine Kopplungsspule für induktives Laden umfasst. Alternativ oder zusätzlich kann der Adapter die für seinen Betrieb notwendige Energie über das Verlängerungskabel und die Fahrzeugdiagnoseschnittstelle vom Fahrzeug beziehen.

Der Adapter kann eine Steuereinheit, wie einen Microcontroller, einen Prozessor, einen Mikroprozessor und/oder einen digitalen Signalprozessor aufweisen. Der Adapter, insbesondere die Steuereinheit des Adapters, kann ausgelegt sein, empfangene Daten vom Fahrzeugdiagnosegerät und/oder vom Fahrzeugsteuergerät zu verarbeiten oder zu bearbeiten oder auszuwerten.

Weiterhin kann der Adapter mindestens einen Speicher aufweisen, wie z.B. random access memory (RAM), read only memory (ROM), eine Festplatte, ein magnetisches Speichermedium und/oder ein optisches Laufwerk. Im Speicher kann ein Programm gespeichert sein, z.B. eine Software zur Ansteuerung der ersten Kommunikationseinheit.

Die erste Kommunikationseinheit kann beispielsweise mindestens eine Sende-und Empfangseinheit umfassen, und kann als solche für eine bidirektionale Kommunikation sowohl mit dem Fahrzeugdiagnosegerät oder dem mobilen Endgerät als auch mit dem Fahrzeugsteuergerät ausgelegt sein. Typischerweise umfasst die erste Kommunikationseinheit eine erste Sende- und Empfangseinheit, welche für die drahtgebundene Kommunikation mit dem Fahrzeugsteuergerät ausgelegt ist. Weiter kann die erste Kommunikationseinheit eine zweite Sende- und Empfangseinheit umfassen, welche für die drahtlose Kommunikation mit dem Fahrzeugdiagnosegerät und/oder dem mobilen Endgerät ausgelegt ist. Die erste Sende- und Empfangseinheit und die zweite Sende- und Empfangseinheit können miteinander verbunden sein, entweder direkt oder über die oben erwähnte Steuereinheit. Die Steuereinheit des Adapters kann eine Kommunikation zwischen der ersten Sende- und Empfangseinheit und der zweiten Sende- und Empfangseinheit steuern. Falls notwendig, können Daten in einem Speicher (z.B. wie oben beschrieben) zwischengespeichert oder gepuffert werden, bevor sie weitergeleitet werden.

In einer Ausführungsform ist die erste Kommunikationseinheit ausgestaltet zum Übertragen von Daten zwischen dem Fahrzeugdiagnosegerät und dem Fahrzeugsteuergerät oder zwischen dem mobilen Endgerät und dem Fahrzeugsteuergerät.

Die erste Kommunikationseinheit kann ausgestaltet sein zum
- Empfangen von Daten vom Fahrzeugdiagnosegerät und/oder vom Fahrzeugsteuergerät und/oder vom mobilen Endgerät.

Weiter können die erste Kommunikationseinheit und/oder die Steuereinheit des Adapters ausgestaltet sein zum
- Durchführen einer bestimmen Aktion nach Empfang der Daten.

Die bestimmte Aktion umfasst zum Beispiel
- Weiterleiten der Daten an das mindestens eine Fahrzeugsteuergerät oder an das Fahrzeugdiagnosegerät oder das mobile Endgerät und/oder
- Bearbeiten der Daten des Fahrzeugsteuergeräts und/oder
- Auswerten der Daten des Fahrzeugsteuergeräts.

Die Daten können z.B. mindestens ein Datenpaket, Fahrzeugdaten, eine Nachricht, eine Bestätigung eine Anfrage und/oder einen Befehl, wie einen Steuerbefehl, enthalten. Falls die Daten vom Fahrzeugdiagnosegerät kommen, können die Daten z.B. eine Nachricht, eine Anfrage, eine Bestätigung oder einen Steuerbefehl vom Fahrzeugdiagnosegerät an das Fahrzeugsteuergerät enthalten. Falls die Nachricht vom Fahrzeugsteuergerät kommt, können die Daten zum Beispiel Fahrzeugdaten, eine Anfrage oder eine Bestätigung enthalten. Die Fahrzeugdaten können z.B. Sensormesswerte, Fehlercodes und/oder eine Fahrzeugidentifikation, wie eine Fahrzeugidentifikationsnummer, enthalten.

Falls die Daten vom mobilen Endgerät kommen, können die Daten z.B. eine Nachricht, eine Anfrage, eine Bestätigung oder einen Steuerbefehl vom mobilen Endgerät an das Fahrzeugsteuergerät oder den Adapter enthalten. Das Auswerten der Daten (s. oben), wie Sensormesswerte und Fehlercodes, des Fahrzeugsteuergeräts kann insbesondere eine Fehlerdiagnose umfassen.

Um eine Kommunikation zwischen der ersten Kommunikationseinheit und dem Fahrzeugsteuergerät und/oder dem Fahrzeugdiagnosegerät und/oder dem mobilen Endgerät aufrecht zu halten, kann ein sogenanntes "keepalive Signal" (Aufrechterhaltungssignal) von der ersten Kommunikationseinheit zum Fahrzeugsteuergerät und/oder Fahrzeugdiagnosegerät und/oder zum mobilen Endgerät gesendet werden. Dies geschieht vorzugsweise in regelmäßigen zeitlichen Abständen.

Der Adapter kann außerdem eine Eingabe- und Ausgabeeinheit für eine Kommunikation mit einem Benutzer aufweisen. In der Regel ergeben sich nach dem Anbringen des Fahrzeugadapters am Fahrzeug zwei Anwendungsfälle: der Benutzer sitzt im Fahrzeug oder er befindet sich außerhalb des Fahrzeugs. Die Eingabe- und Ausgabeeinheit ist vorzugsweise so gestaltet bzw. am Gehäuse positioniert, dass eine Benutzerkommunikation auf den zwei gegenüberliegenden Seiten des Adapters nutzbar ist. Die erste Kommunikationseinheit ist zum Beispiel nach einer bestimmten an der Eingabe- und Ausgabeeinheit erfolgten Eingabe durch einen Benutzer ausgestaltet, eine Kommunikationsverbindung mit dem Fahrzeugdiagnosegerät aufzubauen, eine Kommunikationsverbindung mit den Fahrzeugsteuergerät aufzubauen, eine Kommunikationsverbindung mit dem mobilen Endgerät aufzubauen oder Daten zu Empfangen und/oder Weiterleiten, z.B. vom Fahrzeugsteuergerät an das Fahrzeugdiagnosegerät oder andersherum.

Mit der Erfindung wird auch ein System vorgeschlagen, welches den Adapter der zuvor beschriebenen Art sowie ein Fahrzeugdiagnosegerät umfasst. Das Fahrzeugdiagnosegerät kann z.B.
- eine zweite Kommunikationseinheit zum drahtlosen Kommunizieren mit der ersten Kommunikationseinheit des Adapters und
- eine Steuer- und Verarbeitungseinheit zum Auswerten von Fahrzeugdaten und/oder Ansteuern des Fahrzeugsteuergeräts
   aufweisen. Weiter können ein Speicher und/oder eine Eingabe- und Ausgabeeinheit im Fahrzeugdiagnosegerät vorgesehen sein.

Beispielsweise kann das Fahrzeugdiagnosegerät anhand der oben beschriebenen Fahrzeugidentifikation eine Identifikation des Fahrzeuges feststellen. Weiter kann das Fahrzeugdiagnosegerät anhand der Sensormesswerte und/oder der Fehlercodes mindestens ein potentiell defektes Bauteil im Fahrzeug ermitteln. Das Fahrzeugdiagnosegerät kann mithilfe der zweiten Kommunikationseinheit ausgebildet sein zum Kommunizieren mit weiteren Geräten, Netzwerken oder dem Internet. Das System kann weiterhin ein Fahrzeugsteuergerät und/oder damit verbundene Sensoren umfassen.

Mit diesem System kann das Fahrzeugdiagnosegerät die Fahrzeugdiagnose durchführen, während der Adapter die Daten vom Fahrzeugsteuergerät an das Fahrzeugdiagnosegerät übermittelt.

Mit der Erfindung wird ein weiteres System vorgeschlagen. Das System umfasst den Adapter der zuvor beschriebenen Art sowie und ein mobiles Endgerät. Das mobile Endgerät kann z.B. eine dritte Kommunikationseinheit ausgestaltet zum drahtlosen Kommunizieren mit der ersten Kommunikationseinheit des Adapters aufweisen. Der Adapter umfasst in diesem Fall vorzugsweise eine Steuer- und Verarbeitungseinheit ausgestaltet zum Auswerten der Daten vom Fahrzeugsteuergerät.

Das mobile Endgerät kann weiter eine Steuereinheit, eine Eingabe- und Ausgabeeinheit und/oder einen Speicher aufweisen. Das mobile Endgerät kann z.B. ein Tablet, ein Mobiltelefon, ein Smartphone, ein Laptop und/oder ein Notebook sein. Die Eingabe- und Ausgabeeinheit kann z.B. einen berührungsempfindlichen Bildschirm (touchscreen) umfassen.

Beispielsweise kann der Adapter anhand der oben beschriebenen Fahrzeugidentifikation eine Identifikation des Fahrzeuges feststellen. Weiter kann der Adapter (bzw. die Steuer- und Verarbeitungseinheit des Adapters) ausgestaltet sein, Sensormesswerte und/oder Fehlercodes auszuwerten. Basierend auf der Auswertung kann der Adapter mindestens ein potentiell defektes Bauteil im Fahrzeug ermitteln. Somit kann der Adapter ausgestaltet sein, basierend auf den Sensormesswerten und/oder den Fehlercodes eine Fahrzeugdiagnose durchzuführen. Weiter kann der Adapter ausgestaltet sein, die Ergebnisse der Fahrzeugdiagnose und/oder die Auswertung der Fehlercodes und/oder der Sensormesswerte an das mobile Endgerät zu schicken. Die Eingabe- und Ausgabeeinheit des mobilen Endgeräts kann ausgestaltet sein, die Ergebnisse oder die Auswertung darzustellen. Das mobile Endgerät kann mithilfe der dritten Kommunikationseinheit ausgebildet sein zum Kommunizieren mit weiteren Geräten, Netzwerken oder dem Internet. Das System kann weiterhin ein Fahrzeugsteuergerät und/oder damit verbundene Sensoren umfassen.

Mit diesem System kann also die Fahrzeugdiagnose im Adapter stattfinden, während eine Benutzerkommunikation z.B. durch das mobile Endgerät ermöglicht wird.

Außerdem wird ein Verfahren zum Anwenden des zuvor beschriebenen Adapters vorgeschlagen. Das Verfahren umfasst zumindest die folgenden Schritte:
- Verbinden des Steckers mit der Fahrzeugdiagnoseschnittstelle,
- Anbringen des Gehäuses an der Fahrzeugaußenseite, an der Fensterscheibe, insbesondere der teilweise heruntergelassenen Fensterscheibe, der Fahrzeugtür, der Fahrzeugsäule und/oder dem Fahrzeugdach mittels des Befestigungsmittels, so dass das Gehäuse teilweise aus einem Innenraum des Fahrzeugs herausragt,
- Herstellen einer Kommunikationsverbindung zwischen der ersten Kommunikationseinheit des Adapters und des Fahrzeugsteuergeräts und
- Herstellen einer Kommunikationsverbindung zwischen der ersten Kommunikationseinheit des Adapters und dem Fahrzeugdiagnosegerät oder dem mobilen Endgerät.

Optional umfasst das Verfahren mindestens einen der nachstehenden Schritte:
- Übertragen von Daten zwischen dem Fahrzeugdiagnosegerät und dem Fahrzeugsteuergerät,
- Übertragen von Daten zwischen dem mobilen Endgerät und dem Fahrzeugsteuergerät,
- Empfangen von Fehlercodes und/oder Sensormesswerten durch den Adapter,
- Weiterleiten der Fehlercodes und/oder Sensormesswerte an das Fahrzeugdiagnosegerät,
- Durchführen einer Fahrzeugdiagnose durch das Fahrzeugdiagnosegerät,
- Empfangen von Fehlercodes und/oder Sensormesswerten durch den Adapter,
- Durchführen einer Fahrzeugdiagnose durch den Adapter und/oder
- Übermitteln der Ergebnisse der Fahrzeugdiagnose an das mobile Endgerät.

Es sei an dieser Stelle betont, dass Merkmale, die nur in Bezug auf den Adapter oder das Fahrzeugdiagnosegerät oder das Fahrzeugsteuergerät oder das System genannt wurden, auch für das genannte Verfahren beansprucht werden können und anders herum. Es versteht sich, dass die oben beschriebenen Ausführungsformen miteinander kombiniert werden können, sofern sich die Kombinationen nicht gegenseitig ausschließen.

Im Folgenden werden Ausführungsformen der Erfindung anhand beigefügter Zeichnungen näher erläutert. Hierbei sind die Figuren schematisiert und teilweise vereinfacht. Es zeigen:
- Fig. 1: verschiedene schematische Ansichten eines an einer Fensterscheibe angebrachten Adapters,
- Fig. 2: eine schematische Darstellung eines Systems und Kommunikation zwischen Komponenten des Systems.
- Fig. 3: eine schematische Darstellung eines Systems und Kommunikation zwischen Komponenten des Systems.

In den Figuren sind wiederkehrende Merkmale mit denselben Bezugszeichen versehen.

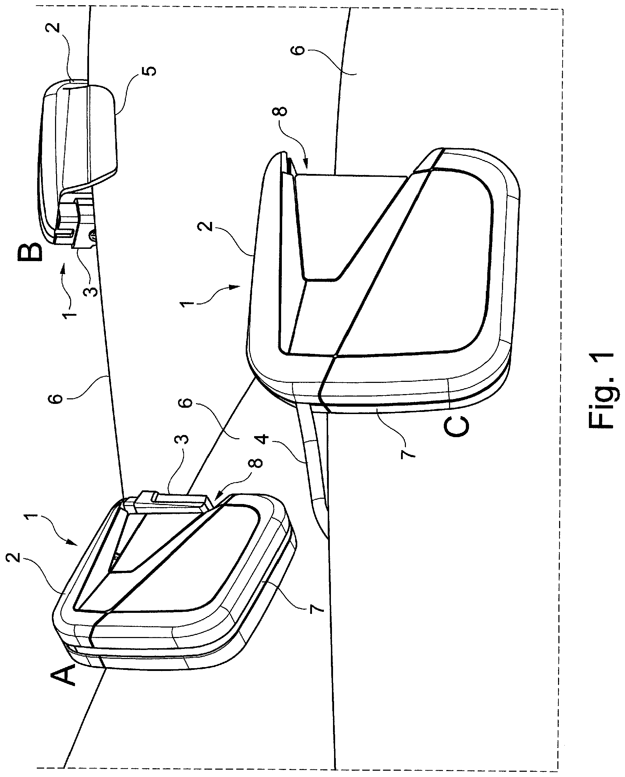

Die Fig. 1 zeigt verschiedene schematische Ansichten eines Adapters 1. Der Adapter umfasst ein Gehäuse 2, einen Stecker 3, ein Verlängerungskabel 4 und ein Befestigungsmittel 5.

Der Stecker 3 ist dazu ausgelegt, mit einer Fahrzeugdiagnoseschnittstelle eines Fahrzeuges verbunden zu werden, welche auch als OBD-Schnittstelle (On-Board-Diagnostics-Schnittstelle) bekannt ist. In der Regel befindet sich die Fahrzeugdiagnoseschnittstelle in einem Fußraum des Fahrzeuges und ist als Steckdose ausgelegt. Der Stecker 3 weist üblicherweise eine genormte Form auf, die mit der Fahrzeugdiagnoseschnittstelle kompatibel ist. Beim Verbinden des Steckers mit der Fahrzeugdiagnoseschnittstelle werden beide elektrisch und mechanisch miteinander verbunden.

Die Fahrzeugdiagnoseschnittstelle ist mit mindestens einem sich im Fahrzeug befindlichen Fahrzeugsteuergerät 10 über entsprechende Signalleitungen verbunden. Das Fahrzeugsteuergerät 10 ist wiederum mit mindestens einem Sensor verbunden, welcher dazu auslegt ist, Messwerte eines Fahrzeugparameters zu erfassen. Die Funktionsweise des Sensors und die Kommunikation zwischen dem Sensor und dem Fahrzeugsteuergerät 10 sind aus dem Stand der Technik bekannt und werden im Folgenden nur kurz umrissen. So kann der mindestens eine Sensor den Betriebsstatus und Betriebszustand von Komponenten des Fahrzeuges überwachen. Die Sensoren können unterschiedlichste Fahrzeugparameter messen. Die verschiedenen Sensoren messen zum Beispiel eine Motortemperatur, eine Batteriespannung, eine Fluiddurchflussrate, eine Öltemperatur, einen Reifendruck, eine Getriebedrehzahl, eine Raddrehzahl, eine Abgassteuerfunktion usw. Der mindestens eine Sensor kann ausgestaltet sein, in regelmäßigen zeitlichen Abständen Signale, Daten oder Messwerte (Sensormesswerte) zu erfassen, z.B. stündlich, täglich, monatlich oder nach jedem Motorenstart. Der Sensor kann auch ausgestaltet sein, erst nach einem entsprechenden Befehl vom Fahrzeugsteuergerät 10 Sensormesswerte zu erfassen. Der Sensor kann die Sensormesswerte in regelmäßigen zeitlichen Abständen an das Fahrzeugsteuergerät schicken. Weiter kann der Sensor dazu ausgebildet sein, Sensormesswerte erst nach Unterschreiten oder Überschreiten eines Grenzwertes an das Fahrzeugsteuergerät zu schicken. Die Sensormesswerte können in einem dazu ausgelegten Speicher des Fahrzeuges zwischengespeichert oder dauerhaft gespeichert werden.

Das Gehäuse 2 des Adapters 1 kann eine Aufnahme 8 aufweisen, in die der Stecker 3 eingesteckt werden kann, falls der Stecker 3 nicht mit der Fahrzeugdiagnoseschnittstelle verbunden ist (s. Fig. 1A und Fig. 1B). Diese Stellung kann als Ruhestellung oder Parkposition des Adapters 1 bzw. des Steckers 3 bezeichnet werden. Damit der Stecker 3 nicht ungewollt aus der Aufnahme 8 abrutscht, kann ein Arretierungsmittel zum Arretieren des Steckers in der Aufnahme 8 vorgesehen sein (nicht gezeigt). Denkbare Arretierungsmittel sind z.B. Sicherungsbolzen, Schrauben, Klemmvorrichtungen, Spannvorrichtungen, eine magnetische Verriegelung und/oder Klettverschluss. Das Arretierungsmittel kann auch eine gecko-artige Verbindung basierend auf van der Waals Kräften und/oder elektrostatischen Ladungen umfassen.

Optional weist der Adapter 1 eine Aufwickeleinheit 7 zum Aufwickeln des Verlängerungskabels 4 auf. Die Aufwickeleinheit 7 kann z.B. eine Wickelnut (s. Fig. 1) oder Wickeltrommel zur vollständigen Aufnahme des Verlängerungskabels 4 aufweisen. Hierdurch können überstehende Konturen oder Schlaufen des Verlängerungskabels 4 verhindert werden.

Wie oben angedeutet, umfasst der Adapter 1 ein mit dem Stecker 3 verbundenes Verlängerungskabel 4. Das Verlängerungskabel 4 verbindet den Stecker 3 mit einer ersten Kommunikationseinheit (s. unten) und hat typischerweise eine Länge von etwa 0,5 m bis 2 m, vorzugsweise zwischen 1 m und 1,5 m. Das Verlängerungskabel 8 kann mindestens zwei Signaladern umfassen. Über das Verlängerungskabel 4 findet eine Kommunikation zwischen der ersten Kommunikationseinheit des Adapters 1 und dem Fahrzeugsteuergerät 10 auf der untersten Protokollschicht beispielsweise mit Hilfe von
- ISO 11898 (CAN),
- ISO 9141 (K-Line) und/oder
- SAE J1850 (Pulsweiten gesteuert)
   statt (s. auch unten). In den höheren Schichten kann es weitere Protokolle geben.

Im Rahmen von Anforderungen nach einem höheren Datendurchsatz (bisher CAN mit 500 kb/s) wird eine ethernetbasierte Fahrzeugkommunikation auf Basis der ISO 13400 (DoIP) integriert. Hierzu wird vorzugsweise kein zusätzliches Kabel verlegt, sondern die niederfrequenten Signalleitungen und die höherfrequenten Signalleitungen (100 Mb/s) in dem Verlängerungskabel4 gebündelt.

Der Durchmesser des Verlängerungskabels 4 hängt typischerweise von der Anzahl der Adern, dem jeweiligem Querschnitt, einer möglichen Verdrillung und einer zusätzlichen Abschirmung ab und kann z.B. zwischen 8 mm und 12 mm betragen. Zur Vermeidung von Beschädigungen des Verlängerungskabels 4 (z.B. durch übermäßiges Biegen oder Knicken des Verlängerungskabels 4) und Problemen hinsichtlich Signallaufzeiten sollte das Verlängerungskabel 4 beim Aufwickeln auf die Aufwickeleinheit 7 einen einzuhaltenden Mindestbiegeradius aufweisen. Ein Krümmungsradius r der Aufwickeleinheit 7 wird daher vorzugsweise entsprechend dem einzuhaltenden Biegeradius des Verlängerungskabels 4 gestaltet.

Für die Bestimmung des Krümmungsradius r kann folgende Formel verwendet werden: r = X ^{∗} äußerer Durchmesser des Verlängerungskabels 4. Der Faktor X hängt unter anderem vom Material des Verlängerungskabels 4 und kann empirisch bestimmt werden. Beispielsweise kann der Faktor X mindestens 4, 5, oder 6 betragen. Weiter kann der Faktor X einen Höchstwert von 12 oder 10 aufweisen. Im Ausführungsbeispiel der Fig. hat das Verlängerungskabel 4 einen äußeren Durchmesser von etwa 9,7 mm. Weiter ist der Faktor X vorzugsweise 8, sodass der Biegeradius der Aufwickeleinheit im gezeigten Ausführungsbeispiel etwa 78 mm beträgt.

Das Befestigungsmittel 5 ist dazu ausgelegt, das Gehäuse 2 an einer Fahrzeugaußenseite, einer Fensterscheibe 6, insbesondere einer teilweise heruntergelassenen Fensterscheibe 6 (s. Fig. 1), einer Fahrzeugtür, einer Fahrzeugsäule und/oder einem Fahrzeugdach anzubringen. Erfindungsgemäß ist das Befestigungsmittel 5 derart gestaltet, dass das Gehäuse 2 nach dem Anbringen am Fahrzeug zumindest teilweise aus einem Innenraum des Fahrzeugs herausragt. Hierdurch kann eine Qualität der durch die erste Kommunikationseinheit empfangenen und gesendeten Funksignale verbessert werden. Beispielsweise umfasst das Befestigungsmittel 5 einen Bügel, Klettverschluss, einen Haken, eine Klemme, einen Saugnapf und/oder einen Magneten. In der Fig. 1 ist das Befestigungsmittel integraler Bestandteil des Gehäuses 2 und bildet einen Vorsprung am Gehäuse 2, mit dem das Gehäuse 2 an die Fensterscheibe 6 gehängt werden kann.

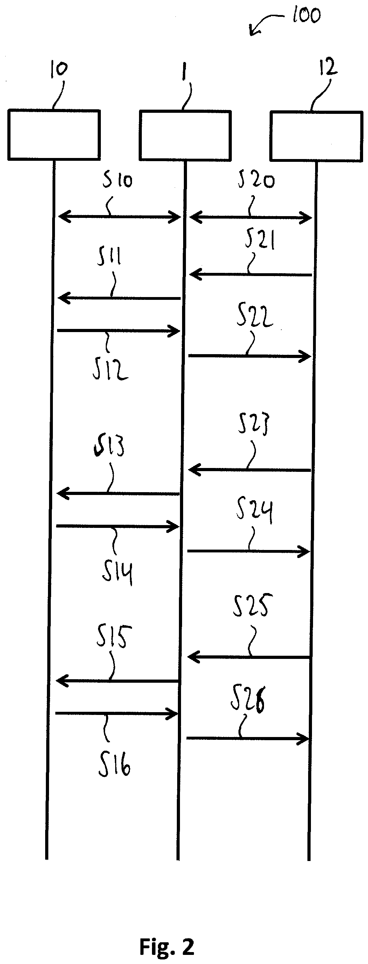

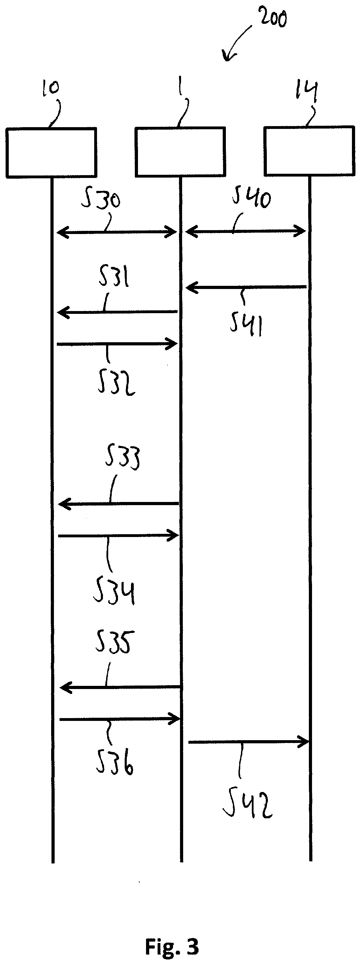

Wie oben bereits angedeutet, umfasst der Adapter 1 außerdem eine erste Kommunikationseinheit, welche mit dem Verlängerungskabel 4 verbunden ist. Insgesamt kann der Adapter 1 durch den Stecker 3, das Verlängerungskabel 4 und das Befestigungsmittel 5 derart mit der Fahrzeugdiagnoseschnittstelle verbunden und an dem Fahrzeug angebracht werden, dass einerseits die erste Kommunikationseinheit drahtgebunden mit dem Fahrzeugsteuergerät 10 kommunizieren kann und andererseits die erste Kommunikationseinheit ungestört durch das metallische Fahrzeug drahtlos mit einem Fahrzeugdiagnosegerät 12 (vgl. Fig. 2) oder einem mobilen Endgerät 14 (s. Fig. 3) kommunizieren kann. Je nach Ausführungsform ist die erste Kommunikationseinheit ausgestaltet zum Übertragen von Daten zwischen dem Fahrzeugdiagnosegerät 12 und dem Fahrzeugsteuergerät 10 oder zwischen dem mobilen Endgerät 14 und dem Fahrzeugsteuergerät 10.

Typischerweise umfasst die erste Kommunikationseinheit eine erste Sende-und Empfangseinheit (nicht dargestellt), welche für die drahtgebundene Kommunikation mit dem Fahrzeugsteuergerät 10 ausgelegt ist. Weiter kann die erste Kommunikationseinheit z.B. eine zweite Sende- und Empfangseinheit (nicht dargestellt) zum drahtlosen Kommunizieren mit dem Fahrzeugdiagnosegerät 12 oder dem mobilen Endgerät 14 umfassen, welche typischerweise gemäß einem vorbekannten Funkstandard oder Funkprotokoll arbeitet. Insbesondere kann die erste Kommunikationseinheit eine Bluetooth-Einheit, eine WLAN (z.B. gemäß IEEE 802.11) oder eine anderes Einheit aufweisen, die ausgelegt ist, über eine Nahfeldverbindung mit einer zweiten Kommunikationseinheit des Fahrzeugdiagnosegeräts 12 oder einer dritten Kommunikationseinheit des mobilen Endgeräts 14 zu kommunizieren. Andersartige drahtlose Verbindungen wie EnOcean, Z-Wave, ZigBee, WiMAX, UMTS / HSDPA, LTE (long term evolution), NanoNetm, UWB (Ultra Wideband), NB-loT (Narrowband Internet of Things), Sigfox oder LoRa sind ebenfalls für die Kommunikation der ersten Kommunikationseinheit möglich und sind dem Fachmann bekannt.

Die erste Sende- und Empfangseinheit und die zweite Sende- und Empfangseinheit des Adapters 1 können miteinander verbunden sein, entweder direkt oder über eine Steuereinheit, wie einen Prozessor oder einen Controller. Die Steuereinheit des Adapters 1 kann eine Kommunikation zwischen der ersten Sende- und Empfangseinheit und der zweiten Sende- und Empfangseinheit des Adapters 1 steuern. Außerdem steuert die Steuereinheit die Kommunikation mit dem Fahrzeugsteuergerät 10 und dem Fahrzeugdiagnosegerät 12 oder dem mobilen Endgerät 14. Die Steuereinheit des Adapters 1 kann ausgelegt sein, empfangene Daten vom mobilen Endgerät 14 und/oder vom Fahrzeugdiagnosegerät 12 und/oder vom Fahrzeugsteuergerät 10 zu verarbeiten oder zu bearbeiten. Falls notwendig, können Daten in einem dazu ausgelegten Speicher zwischengespeichert oder gepuffert werden, bevor sie zu einer weiteren Komponente weitergeleitet werden. Im Speicher kann ein Programm zur Ansteuerung der elektronischen Komponenten des Adapters 1 gespeichert sein.

Im Weiteren wird der Einfachheit halber lediglich auf die erste Kommunikationseinheit Bezug genommen. Es ist jedoch klar, dass die Kommunikation mit dem Fahrzeugsteuergerät 10 insbesondere über die genannte erste Sendeund Empfangseinheit des Adapters 1 laufen kann und dass die Kommunikation mit dem Fahrzeugdiagnosegerät 12 vorzugsweise über die genannte zweite Sende- und Empfangseinheit des Adapters 1 laufen kann und dass die Kommunikation mit dem mobilen Endgerät 14 über die zweite Sende- und Empfangseinheit des Adapters 1 laufen kann.

Insbesondere ist die erste Kommunikationseinheit ausgestaltet zum Empfangen von Daten vom mobilen Endgerät 14 und/oder vom Fahrzeugdiagnosegerät 12 und zum Empfangen von Daten vom Fahrzeugsteuergerät 10. Außerdem ist die erste Kommunikationseinheit ausgestaltet zum Weiterleiten der entsprechenden Daten an das mindestens eine Fahrzeugsteuergerät 10 bzw. das Fahrzeugdiagnosegerät 12 oder das mobile Endgerät 14. Die durch die erste Kommunikationseinheit empfangenen und weitergeleiteten Daten umfassen z.B. mindestens ein Datenpaket, Fahrzeugdaten, eine Nachricht, eine Anfrage (Anforderung), eine Bestätigung und/oder einen Befehl. Hierbei umfassen die Fahrzeugdaten in der Regel Sensormesswerte, Fehlercodes und/oder eine Fahrzeugidentifikation, wie eine Fahrzeugidentifikationsnummer.

Zusätzlich kann der Adapter 1 eine Eingabe- und Ausgabeeinheit für eine Kommunikation mit einem Benutzer, wie einem Fahrzeugmechaniker oder - techniker, haben. Die erste Kommunikationseinheit ist nach einer bestimmten an der Eingabe- und Ausgabeeinheit erfolgten Eingabe durch einen Benutzer ausgestaltet, eine Kommunikationsverbindung mit dem Fahrzeugdiagnosegerät 12 aufzubauen, eine Kommunikationsverbindung mit mobilen Endgerät 14 aufzubauen eine Kommunikationsverbindung mit dem Fahrzeugsteuergerät 10 aufzubauen oder Daten zu Empfangen und/oder Weiterleiten. Zur Stromversorgung weist der Adapter 1 üblicherweise eine aufladbare Batterie auf. Es kann auch vorgesehen sein, dass der Adapter eine Antenne oder eine Kopplungsspule für induktives Laden umfasst. Alternativ oder zusätzlich kann der Adapter die für seinen Betrieb notwendige Energie über das Verlängerungskabel 4 und die Fahrzeugdiagnoseschnittstelle vom Fahrzeug beziehen.

Ziel der Fahrzeugdiagnose ist es, feststellen zu können, welches Bauteil im Fahrzeug defekt ist und wie dieses Bauteil repariert werden kann. Um feststellen zu können, welches Bauteil des Fahrzeuges defekt ist, braucht das Fahrzeugdiagnosegerät 12 in der Regel Fehlercodes (Dynamic Trouble Codes, DTC), welche im laufenden Betrieb des Fahrzeuges über eine Auswertung der Sensormesswerte durch das mindestens eine Fahrzeugsteuergerät 10 erzeugt werden.

Gemäß einer konventionellen Lösung wird das Fahrzeugdiagnosegerät 12 direkt an die Fahrzeugdiagnoseschnittstelle angeschlossen. In diesem Fall kann das Fahrzeugdiagnosegerät 12 direkt mit dem Fahrzeugsteuergerät kommunizieren, um die benötigten Fehlercodes vom Fahrzeugsteuergerät 10 zu erlangen. Gemäß der vorliegenden Erfindung ist jedoch der Adapter 1 zwischengeschaltet. Hierdurch braucht das Fahrzeugdiagnosegerät 12 während der Fahrzeugdiagnose nicht im Fahrzeug zu sein. Insgesamt kann der Werkstattalltag mithilfe des zusätzlichen Adapters 1 flexibler gestaltet werden.
Die Fig. 2 zeigt ein System 100, welches die zuvor genannten Komponenten 1, 10, 12 umfasst. Nachfolgend wird die Kommunikation zwischen den Geräten 1, 10 und 12 unter Bezugnahme der Fig. 2 näher erläutert. Statt der ersten Kommunikationseinheit des Adapters 1 und der zweiten Kommunikationseinheit des Fahrzeugdiagnosegeräts 12 wird im Folgenden und in der Fig. 2 der Einfachheit halber auf den Adapter 1 bzw. das Fahrzeugdiagnosegerät 12 Bezug genommen.

Zunächst wird eine Kommunikationsverbindung zwischen dem Adapter 1 und dem Fahrzeugsteuergerät 10 aufgebaut (S10). Danach (oder davor oder gleichzeitig) wird eine Kommunikationsverbindung zwischen dem Adapter 1 und dem Fahrzeugdiagnosegerät 12 aufgebaut (S20). Jetzt ist der Adapter 1 in der Lage, eine Kommunikation oder Daten zwischen dem Fahrzeugdiagnosegerät 12 und dem Fahrzeugsteuergerät 10 zu vermitteln.

Üblicherweise wird eine Identifikation des Fahrzeugs benötigt, damit das Fahrzeugdiagnosegerät 12 die Fehlercodes einem bestimmten Fahrzeugtyp zuordnen kann. Daher schickt (S21) das Fahrzeugdiagnosegerät 12 eine Anfrage zum Identifizieren des Fahrzeuges an den Adapter 1, welcher die Anfrage an das Fahrzeugsteuergerät 10 weiterleitet (S11). Daraufhin sendet (S12) das Fahrzeugsteuergerät 10 die Fahrzeugidentifikationsnummer (FIN oder engl. VIN) des Fahrzeuges, welche in einem fahrzeugseitigen Speicher gespeichert sein kann, über den Adapter 1 zum Fahrzeugdiagnosegerät 12 (S22). In alternativen Ausführungsformen wird die Fahrzeugidentifikation manuell durch einen Techniker oder Fahrzeugmechaniker am Adapter 1 oder am Fahrzeugdiagnosegerät 12 eingegeben. Jetzt ist die FIN (VIN) dem Fahrzeugdiagnosegerät 12 bekannt.

Hiernach kann das Fahrzeugdiagnosegerät 12 z.B. Fehlercodes vom Fahrzeugsteuergerät 10 anfordern. Der Adapter 1 leitet z.B. die Anforderung vom Fahrzeugdiagnosegerät 12 weiter zum Fahrzeugsteuergerät 10 (S23, S13). Hieraufhin sendet (S14) das Fahrzeugsteuergerät 10 die angeforderten Fehlercodes zum Adapter 1, welcher die Fehlercodes an das Fahrzeugdiagnosegerät 12 schickt (S24). Nach Empfang können die Fehlercodes durch das Fahrzeugdiagnosegerät 12 analysiert bzw. ausgewertet werden.

Für eine genauere Diagnose kann das Fahrzeugdiagnosegerät 12 zusätzlich Sensormesswerte vom Fahrzeugsteuergerät 10 anfordern. Dies geschieht z.B. über eine Anforderung, die vom Adapter 1 an das Fahrzeugsteuergerät 10 weitergeleitet wird (S25, S15). Das Fahrzeugsteuergerät 10 ruft die angeforderten Sensormesswerte z.B. aus einem fahrzeugseitigen Speicher ab oder spricht entsprechende Fahrzeugsensoren zur Herausgabe oder zum Erfassen der Sensormesswerte an. Die Sensormesswerte werden dann vom Fahrzeugsteuergerät 10 zum Adapter 1 geschickt (S16) und vom Adapter 1 zum Fahrzeugdiagnosegerät 12 zur weiteren Auswertung oder Bearbeitung geschickt (S26). Basierend auf den Fehlercodes und den Sensormesswerten kann das Fahrzeugdiagnosegerät 12 feststellen, welches Bauteil im Fahrzeug defekt ist und eine Reparatur benötigt.

An dieser Stelle sei angemerkt, dass bestimmte Sende- und Empfangsschritte zusammengefasst werden können. So können z.B. die Schritte S21 und S23; S11 und S13; S12 und S14; und S22 und S24 jeweils zusammengefasst werden.

Weiter kann das Fahrzeugdiagnosegerät 12 über den Adapter 1 Befehle an das Fahrzeugsteuergerät 10 schicken. Z.B. umfasst ein Befehl an das Fahrzeugsteuergerät eine Einstellung des Sensors oder eine Änderung der Einstellung des Sensors, wobei die Einstellung z.B. eine Empfindlichkeit des Sensors, eine Häufigkeit der Messungen und/oder einen zeitlichen Ablauf der Messungen einschließt.

Zusätzlich oder alternativ kann der Status des Fahrzeugsteuergeräts 10 durch das Fahrzeugdiagnosegerät 12 über eine entsprechende Nachricht geändert oder gesetzt werden. Denkbar wäre in diesem Zusammenhang z.B. Inspektionsintervall, Ansteuerung von Stellgliedern oder dergleichen.

Das Fahrzeugsteuergerät 10 kann auch neue Softwarekomponenten oder Updates bekommen, welche das Fahrzeugdiagnosegerät 12 über den Adapter 1 zum jeweiligen Fahrzeugsteuergerät 10 schickt. Um eine Kommunikation zwischen dem Adapter 1 und dem Fahrzeugsteuergerät10 und/oder zwischen dem Adapter 1 und dem Fahrzeugdiagnosegerät 12 aufrecht zu halten, kann ein sogenanntes "keepalive Signal" (Aufrechterhaltungssignal) von der ersten Kommunikationseinheit zum Fahrzeugsteuergerät 10 und/oder Fahrzeugdiagnosegerät 12 gesendet werden. Dies geschieht vorzugsweise in regelmäßigen zeitlichen Abständen.

Es versteht sich, dass die in den Figuren 1 und 2 dargestellten und oben beschriebenen Ausführungsformen miteinander kombiniert werden können, sofern sich die Kombinationen nicht gegenseitig ausschließen. Merkmale die nur in Bezug auf den Adapter 1 genannt wurden, können auch für System oder das Verfahren beansprucht werden und andersherum.

Die Fig. 3 zeigt ein System 200, welches die zuvor genannten Komponenten 1, 10, 14 umfasst. Nachfolgend wird die Kommunikation zwischen den Geräten 1, 10 und 14 unter Bezugnahme der Fig. 3 näher erläutert. Statt der ersten Kommunikationseinheit des Adapters 1 und der dritten Kommunikationseinheit des mobilen Endgeräts 14 wird im Folgenden und in der Fig. 3 der Einfachheit halber auf den Adapter 1 bzw. das mobile Endgerät 14 Bezug genommen.

Das mobile Endgerät 14 kann eine Steuereinheit, eine Eingabe- und Ausgabeeinheit und/oder einen Speicher aufweisen. Das mobile Endgerät kann z.B. ein Tablet, ein Mobiltelefon, ein Smartphone, ein Laptop und/oder ein Notebook sein. Die Eingabe- und Ausgabeeinheit des mobilen Endgeräts 14 kann z.B. ein berührungsempfindlicher Bildschirm (touchscreen) sein.

Gemäß der Ausführungsform der Fig. 3 ist die Diagnoselogik in dem Adapter 1 vorgesehen. Der Adapter 1 stellt einen Webserver zur Verfügung. Auf dem mobilen Endgerät 14 startet der Anwender einen Webrowser und verbindet sich mit dem Webserver des Adapters 1, um die Fahrzeugdiagnose durchzuführen.

Zunächst wird eine Kommunikationsverbindung zwischen dem Adapter 1 und dem Fahrzeugsteuergerät 10 aufgebaut (S30). Danach (oder davor oder gleichzeitig) wird eine Kommunikationsverbindung zwischen dem Adapter 1 und dem mobilen Endgerät 14 aufgebaut (S40). Jetzt ist der Adapter 1 in der Lage, eine Kommunikation oder Daten zwischen dem mobilen Endgerät 14 und dem Fahrzeugsteuergerät 10 zu vermitteln. Der Benutzer gibt über die Eingabeeinheit des mobilen Endgeräts 14 an, dass er die Fahrzeugdiagnose starten möchte. Hieraufhin übermittelt das mobile Endgerät einen entsprechenden Steuerbefehl an den Adapter (S41).

Üblicherweise wird eine Identifikation des Fahrzeugs benötigt, damit der Adapter 1 die Fehlercodes einem bestimmten Fahrzeugtyp zuordnen kann. Daher schickt (S31) der Adapter 1 eine Anfrage zum Identifizieren des Fahrzeuges an das Fahrzeugsteuergerät 10. Daraufhin sendet (S32) das Fahrzeugsteuergerät 10 die Fahrzeugidentifikationsnummer (FIN oder engl. VIN) des Fahrzeuges, welche in einem fahrzeugseitigen Speicher gespeichert sein kann, zum Adapter 1. In alternativen Ausführungsformen wird die Fahrzeugidentifikation manuell durch einen Techniker oder Fahrzeugmechaniker am Adapter 1 oder am mobilen Endgerät 14 eingegeben und an den Adapter geschickt. Jetzt ist die FIN (VIN) dem Adapter 12 bekannt.

Hiernach kann der Adapter 1 z.B. Fehlercodes vom Fahrzeugsteuergerät 10 anfordern (S33). Hieraufhin sendet (S34) das Fahrzeugsteuergerät 10 die angeforderten Fehlercodes zum Adapter 1. Nach Empfang können die Fehlercodes durch den Adapter 1 analysiert bzw. ausgewertet werden.

Für eine genauere Diagnose kann der Adapter 1 zusätzlich Sensormesswerte vom Fahrzeugsteuergerät 10 anfordern. Dies geschieht z.B. über eine Anforderung, die vom Adapter 1 an das Fahrzeugsteuergerät 10 geschickt wird (S35). Das Fahrzeugsteuergerät 10 ruft die angeforderten Sensormesswerte z.B. aus einem fahrzeugseitigen Speicher ab oder spricht entsprechende Fahrzeugsensoren zur Herausgabe oder zum Erfassen der Sensormesswerte an. Die Sensormesswerte werden dann vom Fahrzeugsteuergerät 10 zum Adapter 1 zur weiteren Auswertung oder Bearbeitung geschickt (S36). Basierend auf den Fehlercodes und den Sensormesswerten kann der Adapter 1 die Fahrzeugdiagnose durch und kann der Adapter 1 feststellen, welches Bauteil im Fahrzeug defekt ist und eine Reparatur benötigt.

Im letzten Schritt (S42) übermittelt der Adapter 1 die Ergebnisse der Fahrzeugdiagnose an das mobile Endgerät 14. Die Ergebnisse werden anschließend auf dem berührungsempfindlichen Bildschirm des mobilen Endgeräts 14 dargestellt.

An dieser Stelle sei angemerkt, dass bestimmte Sende- und Empfangsschritte zusammengefasst werden können. So können z.B. die Schritte S33 und S35; S34 und S36 jeweils zusammengefasst werden.

Weiter kann das mobile Endgerät 14 über den Adapter 1 Befehle an das Fahrzeugsteuergerät 10 schicken. Z.B. umfasst ein Befehl an das Fahrzeugsteuergerät 10 eine Einstellung des Sensors oder eine Änderung der Einstellung des Sensors, wobei die Einstellung z.B. eine Empfindlichkeit des Sensors, eine Häufigkeit der Messungen und/oder einen zeitlichen Ablauf der Messungen einschließt.

Zusätzlich oder alternativ kann der Status des Fahrzeugsteuergeräts 10 durch das mobile Endgerät 14 über eine entsprechende Nachricht geändert oder gesetzt werden. Denkbar wäre in diesem Zusammenhang z.B. Inspektionsintervall, Ansteuerung von Stellgliedern oder dergleichen.

Das Fahrzeugsteuergerät 10 kann auch neue Softwarekomponenten oder Updates bekommen, welche das mobile Endgerät 14 über den Adapter 1 zum jeweiligen Fahrzeugsteuergerät 10 schickt. Um eine Kommunikation zwischen dem Adapter 1 und dem Fahrzeugsteuergerät10 und/oder zwischen dem Adapter 1 und dem mobilen Endgerät 14 aufrecht zu halten, kann ein sogenanntes "keepalive Signal" (Aufrechterhaltungssignal) von der ersten Kommunikationseinheit zum Fahrzeugsteuergerät 10 und/oder zum mobilen Endgerät 14 gesendet werden. Dies geschieht vorzugsweise in regelmäßigen zeitlichen Abständen.

Merkmale die nur in Bezug auf den Adapter 1 genannt wurden, können auch für System oder das Verfahren beansprucht werden und andersherum.

### Bezugszeichenliste:

- 1: Adapter
- 2: Gehäuse
- 3: Stecker
- 4: Verlängerungskabel
- 5: Befestigungsmittel
- 6: Fensterscheibe
- 7: Wickelnut
- 8: Aufnahme
- 10: Fahrzeugsteuergerät
- 12: Fahrzeugdiagnosegerät
- 14: mobiles Endgerät
- 100: System
- 200: System

## Patentansprüche

1. Adapter (1), umfassend:
- ein Gehäuse (2),
- einen Stecker (3) zum Verbinden mit einer Fahrzeugdiagnoseschnittstelle eines Fahrzeuges,
- ein mit dem Stecker (3) verbundenes Verlängerungskabel (4),
- eine mit dem Verlängerungskabel (4) verbundene erste Kommunikationseinheit, welche zum drahtlosen Kommunizieren mit einem Fahrzeugdiagnosegerät (12) und/oder einem mobilen Endgerät (14) und/oder zum Kommunizieren mit mindestens einem mit der Fahrzeugdiagnoseschnittstellte verbundenen Fahrzeugsteuergerät (10) ausgebildet ist, und
- ein lösbares Befestigungsmittel (5) zum Anbringen des Gehäuses (2) an einer Fahrzeugaußenseite, einer Fensterscheibe (6), insbesondere einer teilweise heruntergelassenen Fensterscheibe (6), einer Fahrzeugtür, einer Fahrzeugsäule und/oder einem Fahrzeugdach,
wobei das Befestigungsmittel (5) derart gestaltet ist, dass das Gehäuse (2) nach dem Anbringen am Fahrzeug zumindest teilweise aus einem Innenraum des Fahrzeugs herausragt.

2. Adapter (1) nach dem vorangegangenen Anspruch, wobei das Befestigungsmittel (5) einen Vorsprung, einen Bügel, einen Haken, eine Klemme, einen Saugnapf, Klettverschluss und/oder einen Magneten umfasst.

3. Adapter (1) nach einem der vorstehenden Ansprüche, **gekennzeichnet durch** eine Aufwickeleinheit (7) zum Aufwickeln des Verlängerungskabels (4), wobei die Aufwickeleinheit (7) vorzugsweise eine Wickelnut oder eine Wickeltrommel zur vollständigen Aufnahme des Verlängerungskabels (4) aufweist.

4. Adapter (1) nach Anspruch 3, wobei die Aufwickeleinheit (7) einen Krümmungsradius von mindestens sechsmal einem äußeren Durchmesser des Verlängerungskabels (4) aufweist.

5. Adapter (1) nach einem der vorstehenden Ansprüche, **gekennzeichnet durch** eine Aufnahme (8) im Gehäuse (2) zum Aufnehmen des Steckers (3) in einer Ruhestellung des Adapters (1).

6. Adapter (1) nach Anspruch 5, wobei das Gehäuse (2) Arretierungsmittel zum arretieren des Steckers (3) in der Aufnahme (8) aufweist.

7. Adapter (1) nach einem der vorstehenden Ansprüche, wobei das Verlängerungskabel (4) eine Länge von mindestens 0,5 Meter und/oder höchstens 2 Metern hat und/oder wobei das Verlängerungskabel (4) mindestens zwei Signaladern aufweist.

8. Adapter (1) nach einem der vorstehenden Ansprüche, **dadurch gekennzeichnet, dass** die erste Kommunikationseinheit ausgestaltet ist zum Übertragen von Daten zwischen dem Fahrzeugdiagnosegerät (12) und dem Fahrzeugsteuergerät (10) oder zwischen dem mobilen Endgerät und dem Fahrzeugsteuergerät (10).

9. Adapter (1) nach einem der vorstehenden Ansprüche, wobei die erste Kommunikationseinheit ausgestaltet ist zum
- Empfangen von Daten vom Fahrzeugdiagnosegerät (12) und/oder vom mindestens einen Fahrzeugsteuergerät (10) und/oder vom mobilen Endgerät (14) und
- Weiterleiten der Daten an das mindestens eine Fahrzeugsteuergerät (10) und/oder das Fahrzeugdiagnosegerät (12) und/oder das mobile Endgerät (14).

10. Adapter (1) nach Anspruch 8 oder Anspruch 9, wobei die Daten mindestens ein Datenpaket, Fahrzeugdaten, wie Sensormesswerte, Fehlercodes und/oder eine Fahrzeugidentifikation, oder eine Nachricht, eine Anfrage, eine Bestätigung und/oder einen Befehl enthalten.

11. Adapter (1) nach einem der vorstehenden Ansprüche, umfassend eine Eingabe- und Ausgabeeinheit für eine Kommunikation mit einem Benutzer, wobei die erste Kommunikationseinheit nach einer bestimmten an der Eingabe- und Ausgabeeinheit erfolgten Eingabe durch einen Benutzer ausgestaltet ist, eine Kommunikationsverbindung mit dem Fahrzeugdiagnosegerät (12) aufzubauen, eine Kommunikationsverbindung mit den Fahrzeugsteuergerät (10) aufzubauen, eine Kommunikationsverbindung mit dem mobilen Endgerät (14) aufzubauen oder Daten zu empfangen und/oder weiterleiten und/oder auszuwerten.

12. Verfahren zum Anwenden des Adapters (1) gemäß einem der vorstehenden Ansprüche , umfassend die Schritte:
- Verbinden des Steckers (3) mit der Fahrzeugdiagnoseschnittstelle,
- Anbringen des Gehäuses (2) an der Fahrzeugaußenseite, an der Fensterscheibe (6), insbesondere der teilweise heruntergelassenen Fensterscheibe, der Fahrzeugtür, der Fahrzeugsäule und/oder dem Fahrzeugdach mittels des Befestigungsmittels (5), so dass das Gehäuse teilweise aus einem Innenraum des Fahrzeugs herausragt,
- Herstellen einer Kommunikationsverbindung zwischen der ersten Kommunikationseinheit des Adapters (1) und des Fahrzeugsteuergeräts (10) und
- Herstellen einer Kommunikationsverbindung zwischen der ersten Kommunikationseinheit des Adapters (1) und dem Fahrzeugdiagnosegerät (12) oder dem mobilen Endgerät (14).

13. System umfassend den Adapter (1) nach einem der Ansprüche 1-11 und ein mobiles Endgerät (14), wobei das mobile Endgerät (14) eine dritte Kommunikationseinheit ausgestaltet zum drahtlosen Kommunizieren mit der ersten Kommunikationseinheit des Adapters (1) aufweist, und der Adapter (1) eine Steuer- und Verarbeitungseinheit ausgestaltet zum Auswerten der Daten vom Fahrzeugsteuergerät (10) aufweist.

14. System (100), umfassend den Adapter (1) nach einem der Ansprüche 1-11 und ein Fahrzeugdiagnosegerät (12), wobei das Fahrzeugdiagnosegerät (12)
- eine zweite Kommunikationseinheit ausgestaltet zum drahtlosen Kommunizieren mit der ersten Kommunikationseinheit des Adapters (1) und
- eine Steuer- und Verarbeitungseinheit ausgestaltet zum Auswerten der Daten vom Fahrzeugsteuergerät (10)
aufweist.

## Claims

1. An adapter (1), comprising:
- a housing (2);
- a connector (3) for connecting to a vehicle diagnostic interface of a vehicle;
- an extension cord (4) connected to the connector (3);
- a first communication unit, which is connected to the extension cord (4) and designed to wirelessly communicate with a vehicle diagnostic device (12) and/or with a mobile terminal (14) and/or to communicate with at least one vehicle control unit (10) connected to the vehicle diagnostic interface; and
- a detachable securing means (5) for attaching the housing (2) to a vehicle outer side, a window pane (6), in particular a partially lowered window pane (6), a vehicle door, a vehicle pillar and/or a vehicle roof,
- wherein the securing means (5) is configured in such a way that the housing (2), after having been attached to the vehicle, protrudes at least partially from a passenger compartment of the vehicle.

2. The adapter (1) according to the preceding claim, wherein the securing means (5) comprises a protrusion, a bracket, a hook, a clamp, a suction cup, a hook and loop fastener and/or a magnet.

3. An adapter (1) according to any one of the preceding claims, **characterized by** a winding unit (7) for rolling up the extension cord (4), the winding unit (7) preferably comprising at least one winding groove or a winding drum for completely receiving the extension cord (4).

4. The adapter (1) according to claim 3, wherein the winding unit (7) has a radius of curvature of at least six times an outside diameter of the extension cord (4).

5. An adapter (1) according to any one of the preceding claims, **characterized by** a receiving portion (8) in the housing (2) for receiving the connector (3) in an idle position of the adapter (1).

6. The adapter (1) according to claim 5, wherein the housing (2) comprises locking means for locking the connector (3) in the receiving portion (8).

7. An adapter (1) according to any one of the preceding claims, wherein the extension cord (4) has a length of at least 0.5 meter and/or no more than 2 meters and/or wherein the extension cord (4) comprises at least two signal wires.

8. An adapter (1) according to any one of the preceding claims, **characterized in that** the first communication unit is configured to transmit data between the vehicle diagnostic device (12) and the vehicle control unit (10) or between the mobile terminal and the vehicle control unit (10).

9. An adapter (1) according to any one of the preceding claims, wherein the first communication unit is configured to
- receive data from the vehicle diagnostic device (12) and/or from the at least one vehicle control unit (10) and/or from the mobile terminal (14), and
- forward the data to the at least one vehicle control unit (10) and/or the vehicle diagnostic device (12) and/or the mobile terminal (14).

10. The adapter (1) according to claim 8 or claim 9, wherein the data includes at least one data packet, vehicle data, such as sensor readings, error codes and/or a vehicle identification, or a message, a request, a confirmation and/or a command.

11. An adapter (1) according to any one of the preceding claims, comprising an input and output unit for communicating with a user, the first communication unit being configured, after a certain input has been made by a user at the input and output unit, to establish a communication link to the vehicle diagnostic device (12), establish a communication link to the vehicle control unit (10), establish a communication link to the mobile terminal (14) or receive and/or forward and/or evaluate data.

12. A method for using the adapter (1) according to any one of the preceding claims, comprising the following steps:
- connecting the connector (3) to the vehicle diagnostic interface, attaching the housing (2) to the vehicle outer side, to the window pane (6), in particular the partially lowered window pane, the vehicle door, the vehicle pillar and/or the vehicle roof by means of the securing means (5) so that the housing partially protrudes from the passenger compartment of the vehicle;
- establishing a communication link between the first communication unit of the adapter (1) and the vehicle control unit (10); and
- establishing a communication link between the first communication unit of the adapter (1) and the vehicle diagnostic device (12) or the mobile terminal (14).

13. A system comprising the adapter (1) according to any one of claims 1 to 11 and a mobile terminal (14), the mobile terminal (14) comprising a third communication unit configured to wirelessly communicate with the first communication unit of the adapter (1), and the adapter (1) comprising a control and processing unit configured to evaluate the data from the vehicle control unit (10).

14. A system (100) comprising the adapter (1) according to any one of claims 1 to 11 and a vehicle diagnostic device (12), the vehicle diagnostic device (12) comprising:
- a second communication unit configured to wirelessly communicate with the first communication unit of the adapter (1); and
- a control and processing unit configured to evaluate the data from the vehicle control unit (10).

## Revendications

1. Adaptateur (1), comprenant :
- un boitier (2),
- un connecteur (3) permettant la connexion avec une interface de diagnostic de véhicule d'un véhicule,
- un câble de prolongation (4) relié avec le connecteur (3),
- une première unité de communication reliée avec le câble de prolongation (4), laquelle est conçue pour la communication sans fil avec un appareil de diagnostic de véhicule (12) et/ou un appareil terminal (14) mobile, et/ou pour la communication avec l'au moins un appareil de commande de véhicule (10) relié avec l'interface de diagnostic de véhicule, et
- un moyen de fixation (5) amovible permettant la mise en place du boitier (2) sur un côté extérieur de véhicule, une vitre (6), notamment, une vitre (6) partiellement abaissée, une porte de véhicule, une colonne de véhicule et/ou un pavillon de véhicule,
- où le moyen de fixation (5) est conçu de telle manière que le boitier (2), après la mise en place sur le véhicule, fait saillie au moins partiellement hors de l'habitacle du véhicule.

2. Adaptateur (1) selon la revendication précédente, dans lequel le moyen de fixation (5) comprend une protubérance, un étrier, un crochet, une pince, une ventouse, une fermeture auto-agrippante et/ou un aimant.

3. Adaptateur (1) selon l'une des revendications précédentes, **caractérisé par** une unité d'enroulement (7) permettant d'enrouler le câble de prolongation (4), où l'unité d'enroulement (7) présente de préférence une rainure d'enroulement ou un tambour d'enroulement pour la réception complète du câble de prolongation (4).

4. Adaptateur (1) selon la revendication 3, dans lequel l'unité d'enroulement (7) présente un rayon de courbure égal à au moins six fois un diamètre extérieur du câble de prolongation (4).

5. Adaptateur (1) selon l'une des revendications précédentes, **caractérisé par** un réceptacle (8) dans le boitier (2) permettant la réception du connecteur (3) dans une position de repos de l'adaptateur (1).

6. Adaptateur (1) selon la revendication 5, dans lequel le boitier (2) présente des moyens de verrouillage permettant de verrouiller le connecteur (3) dans le réceptacle (8).

7. Adaptateur (1) selon l'une des revendications précédentes, dans lequel le câble de prolongation (4) a une longueur d'au moins 0,5 mètres et/ou d'au plus 2 mètres, et/ou dans lequel le câble de prolongation (4) présente au moins deux âmes de signal.

8. Adaptateur (1) selon l'une des revendications précédentes, **caractérisé en ce que** la première unité de communication est conçue pour la transmission de données entre l'appareil de diagnostic de véhicule (12) et l'appareil de commande de véhicule (10) ou entre l'appareil terminal mobile et l'appareil de commande de véhicule (10).

9. Adaptateur (1) selon l'une des revendications précédentes, dans lequel la première unité de communication est conçue pour
- la réception de données provenant de l'appareil de diagnostic de véhicule (12), et/ou d'au moins un appareil de commande de véhicule (10), et/ou de l'appareil terminal (14) mobile, et
- la transmission des données à l'au moins un appareil de commande de véhicule (10), et/ou à l'appareil de diagnostic de véhicule (12), et/ou à l'appareil terminal (14) mobile.

10. Adaptateur (1) selon la revendication 8 ou la revendication 9, dans lequel les données contiennent au moins un paquet de données, des données de véhicule, comme des valeurs de mesure de capteurs, des codes d'erreurs et/ou une identification de véhicule, ou un message, une demande, une confirmation et/ou un ordre.

11. Adaptateur (1) selon l'une des revendications précédentes, comprenant une unité de saisie et d'émission pour une communication avec un utilisateur, où la première unité de communication, après une saisie déterminée ayant eu lieu à l'unité de saisie et d'émission par un utilisateur est conçue pour établir une liaison de communication avec l'appareil de diagnostic de véhicule (12), pour établir une liaison de communication avec l'appareil de commande de véhicule (10), pour établir une liaison de communication avec l'appareil terminal (14) mobile ou pour recevoir, et/ou pour transmettre, et/ou pour exploiter des données.

12. Procédé de mise en œuvre de l'adaptateur (1) selon l'une des revendications précédentes, comprenant les étapes :
- de connexion du connecteur (3) avec l'interface de diagnostic de véhicule, la mise en place du boitier (2) sur le côté extérieur de véhicule, sur la vitre (6), notamment, sur la vitre partiellement abaissée, la porte de véhicule, la colonne de véhicule, et/ou sur le pavillon de véhicule à l'aide du moyen de fixation (5), de sorte que le boitier fait partiellement saillie hors de l'habitacle du véhicule,
- d'établissement d'une liaison de communication entre la première unité de communication de l'adaptateur (1) et l'appareil de commande de véhicule (10), et
- d'établissement d'une liaison de communication entre la première unité de communication de l'adaptateur (1) et l'appareil de diagnostic de véhicule (12) ou l'appareil terminal mobile (14).

13. Système comprenant l'adaptateur (1) selon l'une des revendications 1 à 11 et un appareil terminal (14) mobile, où l'appareil terminal (14) mobile présente une troisième unité de communication conçue pour la communication sans fil avec la première unité de communication de l'adaptateur (1), et l'adaptateur (1) présente une unité de commande et de traitement conçue pour l'exploitation des données provenant de l'appareil de commande de véhicule (10).

14. Système (100), comprenant l'adaptateur (1) selon l'une des revendications 1 à 11 et un appareil de diagnostic de véhicule (12), dans lequel l'appareil de diagnostic de véhicule (12) présente
- une deuxième unité de communication conçue pour la communication sans fil avec la première unité de communication de l'adaptateur (1), et
- une unité de commande et de traitement conçue pour l'exploitation des données provenant de l'appareil de commande de véhicule (10).
